# EUROPÄISCHE PATENTSCHRIFT

(11) **EP 2 573 478 B1**
(45) Veröffentlichungstag und Bekanntmachung des Hinweises auf die Patenterteilung: **01.05.2019**
(21) Anmeldenummer: 12005656.9
(22) Anmeldetag: 03.08.2012
(51) Int. Cl.: F24F 12/00, F24F 13/20

(54) **Lüftungsgerät mit Wärmerückgewinnung**
Ventilation device with heat recovery
Appareil d'aération avec récupération de chaleur

(30) Priorität: 23.09.2011 DE 102011114302
(43) Veröffentlichungstag der Anmeldung: 27.03.2013
(73) Patentinhaber: MAICO Elektroapparate-Fabrik GmbH, 78056 Villingen-Schwenningen (DE)
(72) Erfinder: Meißner, Johannes, 78052 Villingen-Schwenningen (DE); Kammerer, Stefan, 78120 Furtwangen (DE)
(74) Vertreter: Dietz, Christopher Friedrich

(56) Entgegenhaltungen:
- EP-A1- 2 314 941
- EP-A1- 2 354 690
- DE-A1- 3 208 392
- US-A1- 2007 049 189

## Beschreibung

Die Erfindung betrifft ein Lüftungsgerät mit Wärmerückgewinnung für mindestens einen Raum eines Gebäudes oder dergleichen, mit einem Gehäuse, in dem ein Wärmetauscher angeordnet ist, durch den ein Zuluftweg für Zuluft und ein Abluftweg für Abluft verläuft, wobei Zuluftweg und Abluftweg mittels des Wärmetauschers in Wärmetausch zueinander bringbar sind und der Wärmetauscher mittels mindestens eines zuluftwegseitigen und/oder abluftwegseitigen Bypasses überbrückbar ist sowie mit mindestens einem mindestens eine Gehäuseöffnung des Gehäuses verschließenden, abnehmbaren Gehäusedeckel.

Lüftungsgeräte nach dem Oberbegriff des Anspruchs 1 sind zum Beispiel aus der EP 2 314 941 A1 oder aus der DE 32 08 392 A1 bekannt. Über den Zuluftweg wird Au-ßenluft dem Raum zugeführt. Der Abluftweg ermöglicht das Abführen von Raumluft, die als Fortluft an die Außenatmosphäre abgegeben wird. Die beiden sich hierdurch ergebenden Luftströme durchsetzen den Wärmetauscher, wobei sie strömungstechnisch voneinander getrennt sind, jedoch im Wärmetausch zueinander stehen, mit der Folge, dass bei kühlen Außentemperaturen die dem Raum zugeführte Außenluft im Wärmetauscher erwärmt wird. Die Wärmeenergie liefert die abgeführte Abluft. Bei hohen Außentemperaturen wird die Zuluft durch die in der Temperatur niedrigere Abluft gekühlt. Die bekannten Geräte weisen jeweils ein Gehäuse auf, in dem die für den Betrieb notwendigen Aggregate untergebracht sind. Um Zugang zu diesen Aggregaten zu erhalten, weist das Gehäuse eines derartigen, vorbekannten Lüftungsgeräts eine Gehäuseöffnung auf, die mit einem abnehmbaren Gehäusedeckel verschlossen ist. Um die Funktionsvielfalt der bekannten Lüftungsgeräte zu erhöhen und das Steuerungs- und/oder Regelverhalten zu verbessern, so dass die Betriebsführung besser an die jeweils vor Ort vorliegende Lüftungs- und Temperatursituation angepasst werden kann, ist die Ausbildung verschiedener Bauarten der Lüftungsgeräte bekannt. Es gibt Lüftungsgeräte mit Wärmetauschern, durch die zwingend der Zuluftstrom und der Abluftstrom verläuft, ohne dass auf diese Luftströme im Bereich des Wärmetauschers Einfluss genommen werden kann. Es ist ferner eine Geräteversion bekannt, bei der der Wärmetauscher hinsichtlich der Zuluft oder der Abluft umgangen werden kann oder auch teilweise umgangen werden kann, indem ein Bypass vorgesehen ist, welcher mittels einer Luftklappe mehr oder weniger weit geöffnet beziehungsweise verschlossen oder auch ganz geöffnet werden kann. Hierdurch lässt sich die Intensität des Wärmetauschs beeinflussen. Der Betreiber eines derartigen Lüftungsgeräts muss demgemäß beim Kauf entscheiden, welche Lüftungsgerätausbildung er einsetzen möchte. Der Hersteller derartiger Lüftungsgeräte produziert diese in unterschiedlichen Bauarten, wodurch die Produktions- und Lagerkosten erhöht und damit insgesamt auch die Verkaufspreise erhöht werden.

Der Erfindung liegt die Aufgabe zugrunde, ein Lüftungsgerät der eingangs genannten Art zu schaffen, das bei vielfältiger Einsatzmöglichkeit einfach und kostengünstig aufgebaut ist. Dennoch soll die Möglichkeit bestehen, auf einfache Art und Weise unterschiedliche Geräteausbildungen, insbesondere zur Realisierung unterschiedlicher Betriebsarten, zur Verfügung zu stellen.

Diese Aufgabe wird erfindungsgemäß dadurch gelöst, dass zur Ausbildung eines Lüftungsgerätsystems mit verschiedenen Gerätevarianten, insbesondere für mögliche unterschiedliche Betriebsarten, die Gehäuseöffnung mit einem entsprechenden von verschiedenen Gehäusedeckeln verschlossen ist, wobei mindestens ein mit dem Bypass versehener Gehäusedeckel und mindestens ein bypassfreier Gehäusedeckel wahlweise zur Verfügung stehen. Der Hersteller eines derartigen Lüftungsgeräts stellt somit baugleiche Grundvarianten her, also ein Lüftungsgerät mit Gehäuse und entsprechenden in das Gehäuse eingebauten Aggregaten. Ferner stellt dieser Hersteller verschiedene Gehäusedeckel her, nämlich einen, der mit einem Bypass versehen ist und einen anderen, der bypassfrei ausgebildet ist. Wird zum Schließen des Gehäuses der Gehäusedeckel in die zugehörige Gehäuseöffnung eingesetzt, so ergeben sich zwei verschiedene Gerätevarianten, nämlich die eine, die eine Umgehung des Wärmetauschers im Bedarfsfalle ermöglicht, indem ein Gehäusedeckel verwendet wird, der den Bypass aufweist oder das Verschließen des Gehäuses erfolgt mit einem bypassfreien Gehäusedeckel, mit der Folge, dass der Wärmetauscher dann stets im vollem Umfang den Wärmetausch durchführt. Gleichwohl ist bei der letztgenannten (und auch bei der erstgenannten) Gerätevariante selbstverständlich auch eine Steuerung beziehungsweise Regelung möglich, indem der über den Zuluftweg beziehungsweise den Abluftweg strömende Zuluftvolumenstrom beziehungsweise Abluftvolumenstrom entsprechend beeinflusst, also vergrößert oder verkleinert wird. Aufgrund der erfindungsgemäßen Ausbildung können somit auf sehr einfache Art und Weise verschiedene Gerätevarianten durch entsprechende Wahl eines von verschiedenen Gehäusedeckeln realisiert werden, wobei dadurch insbesondere auch die Möglichkeit besteht, ein Lüftungsgerät mit bestimmten Betriebsarten zur Verfügung zu stellen, welche bei dem Lüftungsgerät der anderen Gerätevariante nicht oder nur eingeschränkt zur Verfügung stehen. So sind die Steuer- und Regelungsmöglichkeiten im Falle einer Gerätevariante mit Bypass erheblich umfangreicher als bei einer bypassfreien Geräteversion. Dennoch sind die Herstellungskosten derartiger, einem Lüftungsgerätesystem angehörenden Lüftungsgeräte relativ niedrig, weil im Wesentlichen nur über die Wahl des verschiedenen Gehäusedeckels die Gerätevarianten erzielt werden. Im Übrigen sind die zugehörigen Grundgeräte baugleich beziehungsweise im Wesentlichen baugleich ausgebildet. Hierauf wird nachstehend noch näher eingegangen.

Laut der Erfindung ist vorgesehen, dass der Bypass in dem entsprechenden Gehäusedeckel integriert ist. Der Gehäusedeckel soll durch die Integration des Bypasses in seinen Abmessungen nicht oder nur geringfügig unterschiedlich zu dem bypassfreien Gehäusedeckel ausgestaltet sein. Insofern soll der Bypass nicht die Außen- oder Innenseite des Gehäusedeckels überragen.

Eine Weiterbildung der Erfindung sieht vor, dass in dem Gehäuse Bypassanschlüsse derart angeordnet sind, dass diese mit dem Bypass verbunden sind, wenn mit dem mit Bypass versehenen Gehäusedeckel die Gehäuseöffnung verschlossen ist. Die Anordnung der Bypassanschlüsse "in dem Gehäuse" bedeutet, dass sich diese im Innenraum des Gehäuses befinden, insbesondere an mindestens einem Bauteil/Aggregat des Lüftungsgeräts und/oder am Gehäuse selbst, insbesondere im Bereich der Wandstärke des Gehäuses, vorzugsweise im Bereich der Wandstärke an der Gehäuseöffnung, wobei sich im letzteren Fall vorzugsweise der Bypasskanal des Gehäusedeckels innerhalb der Wandstärke des Gehäusedeckels befindet und in der Stirnwandzone des Gehäusedeckels mündet. Hierdurch geht der im Gehäusedeckel vorgesehene Bypass ohne Umlenkung in die Bypassanschlüsse des Gehäuses über, sofern sich - wie erwähnt - die Bypassanschlüsse im Bereich der Wandstärke an der Gehäuseöffnung befinden. Befinden sich die Bypassanschlüsse im Innenraum des Gehäuses, so fluchten ihre Öffnungsebenen mit der Vorderwand beziehungsweise Rückwand des Gehäusedeckels, mit der Folge, dass der im Gehäusedeckel vorgesehene Bypass zwei Umlenkungen, von vorzugsweise 90°, aufweist und/oder der Luftstrom im Bypass zweimal umgelenkt wird, so dass jeweils der Bypassluftstrom, der von einem der Bypassanschlüsse kommt, in Richtung auf den Gehäusedeckel, und zwar quer zur Fläche der Vorderwand (beziehungsweise Rückwand) des Gehäusedeckels zuströmt, im Gehäusedeckel umgelenkt wird, so dass er in Richtung der Fläche der Vorderwand des Gehäusedeckels strömt und dann wiederum umgelenkt wird, um wiederum quer zur Fläche der Vorderwand des Gehäusedeckels, diesen verlassend, zu dem entsprechenden Bauteil/Aggregat des Lüftungsgeräts zu strömen. Auch Mischformen (ein Bypassanschluss im Innern des Gehäuses und ein Bypassanschluss im Bereich der Wandstärke der Gehäuseöffnung) der vorstehenden Ausführungsvarianten sind möglich.

Eine Weiterbildung der Erfindung sieht vor, dass der bypassfreie Gehäusedeckel mindestens einen Verschlussbereich aufweist, der mindestens einen der Bypassanschlüsse verschließt, wenn mit dem bypassfreien Gehäusedeckel die Gehäuseöffnung verschlossen ist. Durch Einsetzen des Gehäusedeckels in die Gehäuseöffnung legt sich der Verschlussbereich des Gehäusedeckels auf den Bypassanschluss, mit der Folge, dass dadurch der Bypassanschluss verschlossen wird und das Lüftungsgerät ohne Bypass arbeitet. Verschließt also der bypassfreie Gehäusedeckel die Gehäuseöffnung, so wird automatisch durch Verschluss des mindestens einen Bypassanschlusses die Funktionsfähigkeit des Lüftungsgeräts dadurch hergestellt, dass ein Luftstrom nicht einen fälschlicherweise offenen Bypassanschluss verlassen kann.

Es ist vorteilhaft, wenn in dem Gehäuse mindestens ein Einsetzplatz für eine Einbaueinheit ausgebildet ist. Dieser Einsetzplatz wird vorzugsweise mit der Einbaueinheit bestückt, wenn ein Lüftungsgerät mit Bypassfunktion eingesetzt wird. Bei dieser Einbaueinheit handelt es sich insbesondere um ein Aggregat, das für eine Gerätefunktion mit Bypass vorteilhaft und/oder für bestimmte Betriebsarten notwendig ist.

Eine Weiterbildung der Erfindung sieht eine Einbaueinheit vor, die in Abhängigkeit von den verschiedenen Gerätevarianten in den Einsetzplatz eingesetzt ist oder nicht eingesetzt ist. Da die verschiedenen Gerätevarianten durch die Realisierung des Bypasses oder durch die bypassfreie Ausbildung gekennzeichnet sind, erfolgt das Einsetzen oder Nichteinsetzen der Einbaueinheit vorzugsweise in Abhängigkeit der Bypassausbildung oder der bypassfreien Ausbildung.

Bevorzugt ist vorgesehen, dass die Einbaueinheit mindestens einen der Bypassanschlüsse aufweist oder mindestens eine lufttechnische Verbindung zu mindestens einem der Bypassanschlüsse besitzt. Im erstgenannten Fall wird durch Einsetzen/Einbauen der Einbaueinheit in das Lüftungsgerät der Bypassanschluss realisiert und positioniert, derart, dass bei Verwendung des Gehäusedeckels mit Bypass dieser an den Bypassanschluss selbsttätig beim mittels des Gehäusedeckels erfolgenden Verschließen der Gehäuseöffnung an die weiteren Aggregate des Lüftungsgeräts angeschlossen wird. Dieses Anschließen erfolgt vorzugsweise an beiden Enden des Bypasses. Im zweitgenannten Fall sorgt das Einsetzen der Baueinheit dafür, dass zumindest ein am/im Gehäuse vorhandener Bypassanschluss mit einem Aggregat des Lüftungsgeräts lufttechnisch verbunden wird.

Es ist vorteilhaft, wenn die Einbaueinheit eine Volumenstromstelleinrichtung, insbesondere eine verstellbare Luftklappe, für den Bypass aufweist. Mittels der Volumenstromstelleinrichtung lässt sich der den Bypass passierende Luftstrom im Volumenstrom variieren, wodurch es zu einem mehr oder weniger großen Umgehen des Wärmetauschers kommt und hierdurch der Wärmetauscheffekt steuerbar beziehungsweise regelbar ist. Die Volumenstromstelleinrichtung ermöglicht auch ein vollständiges Schließen des Bypasses beziehungsweise sein maximales Öffnen. Zwischenstellungen zwischen diesen Extremwerten sind vorzugsweise stufenlos oder in Stufen einstellbar.

Insbesondere ist das Gehäuse aus expandiertem Homopolymerisat hergestellt oder es weist dieses Material auf. Dadurch ist ein leichtes, thermisch isoliertes und auch schallisoliertes Gehäuse geschaffen, das kostengünstig und einfach herstellbar ist. Vorzugsweise besteht der Gehäusedeckel aus expandiertem Homopolymerisat oder er weist dieses Material auf. Damit treffen die vorstehend zum Gehäuse genannten Vorteile auch auf den Gehäusedeckel zu.

Bei dem expandierten Homopolymerisat handelt es sich bevorzugt um expandiertes Polypropylen oder expandiertes Polystyrol.

Wie bereits vorstehend erwähnt, ist der Bypass im Gehäusedeckel insbesondere integriert angeordnet. Dabei kann besonders bevorzugt vorgesehen sein, dass der Bypass in der Wandstärke des Gehäusedeckels angeordnet ist. Hierzu weist der Gehäusedeckel eine Wandstärke auf, die größer ist als die entsprechende Querschnittsabmessung des Bypasses, sodass letzterer die plattenförmige Kontur des Gehäusedeckels nicht beeinflusst.

Insbesondere ist der Bypass als Kanal direkt in dem Homopolymerisat des Gehäusedeckels ausgebildet. Hierzu weist das Homopolymerisat bevorzugt eine geschlossenporige Struktur auf. Wird der Gehäusedeckel zu seiner Herstellung aus Homopolymerisat geschäumt, so ist es zur Erzeugung des Bypasses lediglich erforderlich, eine Form mit mindestens einem entsprechenden Kern zu verwenden, der für die Bypassausbildung den entsprechenden Freiraum schafft.

Eine Weiterbildung der Erfindung sieht vor, dass der Gehäusedeckel eine Gehäusewand ist, die eine komplette Seitenfläche des Gehäuses bildet. Bevorzugt weist das Gehäuse eine quaderförmige Gestalt auf, die insgesamt sechs Seitenflächen besitzt. Mindestens eine dieser Seitenflächen wird von dem mindestens einen Gehäusedeckel geschaffen.

Die Zeichnungen veranschaulichen die Erfindung anhand eines Ausführungsbeispiels und zwar zeigt:
- Figur 1: eine schematische Ansicht der wichtigsten Aggregate eines Lüftungsgeräts,
- Figur 2: eine perspektivische Ansicht auf das Lüftungsgerät mit offenem Gehäuse,
- Figur 3: eine Schnittansicht durch das Lüftungsgerät der Figur 2 entlang der Linie III-III, wobei eine Gehäuseöffnung des Lüftungsgeräts mit einem der beiden dargestellten Gehäusedeckel verschließbar ist,
- Figuren 4 und 5: perspektivische Ansichten von Aggregaten des Lüftungsgeräts in unterschiedlichen Betriebsstellungen.

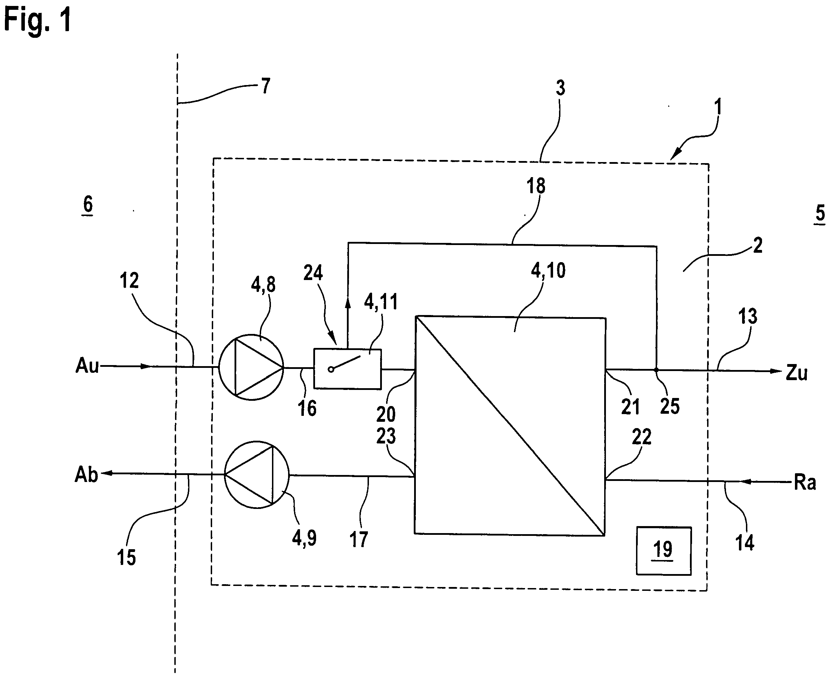

Die schematische Darstellung der Figur 1 zeigt ein Lüftungsgerät 1, das im Innern 2 seines Gehäuses 3 verschiedene, insbesondere lufttechnische Aggregate 4 aufweist. Das Lüftungsgerät 1 ist in einem Raum 5 eines Gebäudes oder dergleichen aufgestellt und wirkt lufttechnisch mit dem Raum 5 sowie mit der Außenatmosphäre 6 zusammen. Die Grenze zwischen dem Raum 5 und der Außenatmosphäre 6 ist durch eine Gebäudewand 7 realisiert.

Bei den in der Figur 1 ersichtlichen Aggregaten 4 handelt es sich um einen Zuluftventilator 8, einen Abluftventilator 9, einen Wärmetauscher 10 und eine Volumenstromstelleinrichtung 11. Das Lüftungsgerät 1 ist mit einem Außenluftanschluss 12, einem Zuluftanschluss 13, einem Raumluftanschluss 14 und einem Abluftanschluss 15 versehen. Zwischen Außenluftanschluss 12 und Zuluftanschluss 13 weist das Lüftungsgerät 1 einen Zuluftweg 16 und zwischen dem Raumluftanschluss 14 und dem Abluftanschluss 15 einen Abluftweg 17 auf. Zuluftweg 16 und Abluftweg 17 verlaufen durch den Wärmetauscher 10, wodurch Zuluftweg 16 und Abluftweg 17 in Wärmetausch zueinander stehen, jedoch strömungstechnisch voneinander getrennt sind. Ferner weist das Lüftungsgerät 1 einen Bypass 18 auf, der im Zuluftweg 16 derart angeordnet ist, dass der Wärmetauscher 10 umgangen werden kann. Alternativ ist es auch möglich, dass sich der Bypass im Abluftweg 17 befindet oder dass sowohl Zuluftweg 16 als auch Abluftweg 17 jeweils mit einem den Wärmetauscher 10 umgehenden Bypass versehen sind. Das Lüftungsgerät 1 weist ferner eine Steuereinrichtung 19 auf, die auch als Regeleinrichtung ausgebildet sein kann und die zur Betriebsführung die einzelnen Aggregate 4 steuert beziehungsweise regelt.

Im Betrieb des Lüftungsgeräts 1 arbeiten der Zuluftventilator 8 und der Abluftventilator 9 mit aufeinander abgestimmten Drehzahlen, um dem Raum 5 einen Zuluftvolumenstrom zuzuführen, der ebenso groß oder etwa ebenso groß ist, wie ein aus dem Raum abzutransportierender Abluftvolumenstrom. Hierbei wird im Einzelnen in einer ersten Betriebsart vom Zuluftventilator 8 Außenluft Au durch den Außenluftanschluss 12 angesaugt und einem Eingang 20 des Wärmetauschers 10 zugeführt. Der Außenluftstrom durchströmt den Wärmetauscher 10 und tritt an seinem Ausgang 21 wieder aus, strömt dann zum Zuluftanschluss 13 und tritt dort als Zuluft Zu in den Raum 5 ein. Der Abluftventilator 9 saugt Raumluft Ra am Raumluftanschluss 14 an, die in den Eingang 22 des Wärmetauscher 10 eintritt, den Wärmetauscher 10 durchsetzt und an seinem Ausgang 23 wieder austritt und schließlich aus dem Abluftanschluss 15 als Abluft Ab in die Außenatmosphäre 6 abgegeben wird. Da zwischen dem Zuluftweg 16 und dem Abluftweg 17 im Wärmetauscher 10 ein Wärmetausch stattfindet, ergibt sich bei kalten Außentemperaturen die Situation, dass kalte Außenluft Au angesaugt, im Wärmetauscher 10 erwärmt wird, da die Raumluft Ra, die den Wärmetauscher 10 ebenfalls durchströmt, wärmer ist als die kalte Außenluft Au. Insofern tritt vorgewärmte Außenluft Au als Zuluft Zu in den Raum 5 ein. Die wärmere Raumluft Ra, die den Abluftweg 17 durchströmt, wird im Wärmetauscher abgekühlt und verlässt als entsprechend kühlere Luft das Lüftungsgerät 1 als Abluft Ab. Weist die Außenatmosphäre 6 sehr warme Außenluft Au auf, so wird diese unter der Voraussetzung, dass im Raum 5 Raumluft mit niedrigerer Temperatur vorhanden ist, beim Passieren des Lüftungsgerät 1 gekühlt und tritt als entsprechend gekühlte Zuluft Zu in den Raum 5 ein. Die Energie für das Kühlen stellt die abgezogene Raumluft Ra durch Wärmetausch im Wärmetauscher 10 zur Verfügung. Die Steuereinrichtung 19 nimmt die entsprechenden Steuermaßnahmen vor, wobei die Größe der Volumenströme im Zuluftweg 16 und im Abluftweg 17 durch entsprechende Drehzahlen des Zuluftventilators 8 und des Abluftventilators 9 eingestellt/eingeregelt werden. In dieser ersten Betriebsart sind der Bypass und die Volumenstromstelleinrichtung nicht erforderlich.

In einer zweiten Betriebsart des Lüftungsgeräts 1, die von der Steuereinrichtung 19 kontrolliert wird, tritt der Bypass 18 in Funktion. Bei der zuvor beschriebenen ersten Betriebsart befindet sich die Volumenstromstelleinrichtung 11 in Schließstellung, sodass der Bypass 18 geschlossen ist und daher dort keine Luft strömen kann. In der zweiten Betriebsart wird die Volumenstromstelleinrichtung 11 mehr oder weniger weit geöffnet, mit der Folge, dass die vom Zuluftventilator 8 geförderte Außenluft Au sich entsprechend der Einstellung der Volumenstromstelleinrichtung 11 aufteilt, d.h., ein Teil des Außenluftstroms durchsetzt den Wärmetauscher 10 und ein entsprechend anderer Teil den Bypass 18, wobei dieser Teil den Wärmetauscher 10 umgeht. Die Volumenstromstelleinrichtung 11 bildet somit eine Abzweigung 24. An einer Einmündung 25 werden die beiden Teilströme wieder vereinigt, sodass am Zuluftanschluss 13 wieder der gesamte Volumenstrom der Außenluft Au zur Verfügung steht. Es wird deutlich, dass in Abhängigkeit der Einstellung der Volumenstromstelleinrichtung 11 der Wärmetauscher 10 mehr oder weniger umgangen werden kann. In einem Extremfall ist der Bypass 18 geschlossen, sodass die gesamte Außenluft Au den Wärmetauscher 10 passiert oder im anderen Extremfall ist mittels der Volumenstromstelleinrichtung 11 der Bypass 18 komplett geöffnet und der Weg zum Wärmetauscher 10 abgesperrt, d.h., an den Eingang 20 des Wärmetauschers 10 gelangt keine Außenluft Au, sodass der Wärmetauscher 10 komplett vom Außenluftstrom umgangen wird. Aus alledem wird deutlich, dass mittels des Lüftungsgeräts 1 sowohl eine Lüftungsfunktion als auch eine Wärmerückgewinnungsfunktion durchgeführt werden kann, wobei die Wärmerückgewinnungsfunktion in der ersten Betriebsart permanent in vollem Umfang wirksam ist und in der zweiten Betriebsart in ihrer Wirksamkeit beeinflusst werden kann.

Eine Steuerung oder Regelung der Volumenstromstelleinrichtung 11 erfolgt mittels der Steuereinrichtung 19, die - wie vorstehend zur ersten Betriebsart bereits beschrieben - auch in der zweiten Betriebsart den Zuluftventilator 8 und den Abluftventilator 9 steuert beziehungsweise regelt. Sofern anstelle des Bypasses 18 im Zuluftweg 16 ein entsprechender Bypass 18 im Abluftweg 17 vorhanden ist, ergeben sich hinsichtlich des Wärmetauschs entsprechende Ergebnisse, wobei sich die Volumenstromstelleinrichtung 11 dann selbstverständlich im Abluftweg 17 befindet. Alternativ ist es auch denkbar, dass beide Wege, nämlich der Zuluftweg 16 und der Abluftweg 17 jeweils einen Bypass 18 mit Volumenstromstelleinrichtung 11 aufweisen. Vorzugsweise ist die Volumenstromstelleinrichtung 11 als verstellbare Luftklappe 50 ausgebildet.

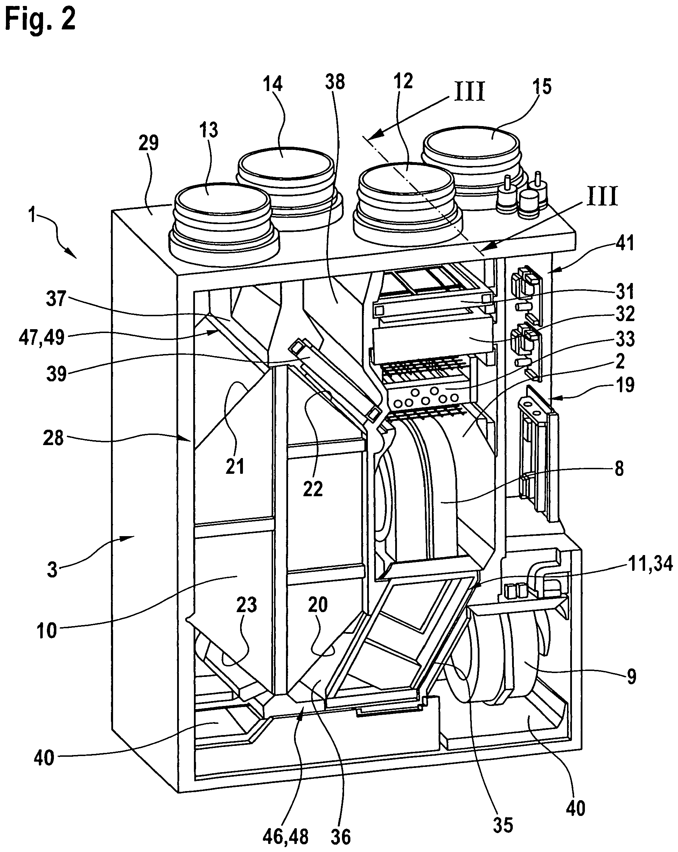

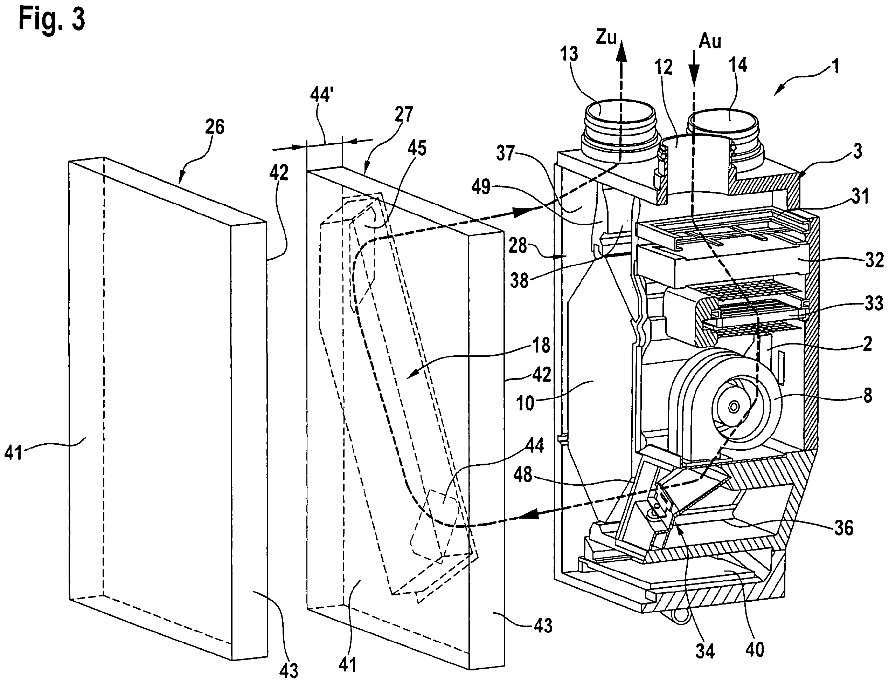

Aus der Figur 2 geht das Lüftungsgerät 1 in perspektivischer Darstellung hervor. Das Gehäuse 3 ist geöffnet dargestellt. Es ist vorzugsweise quaderförmig ausgebildet und weist insgesamt sechs Seitenflächen auf, wobei die in Figur 2 nach vorne weisende Seite des Gehäuses 3 mittels eines Gehäusedeckels 26 oder mittels eines Gehäusedeckels 27 verschließbar ist, d.h., das Gehäuse 3 des Lüftungsgeräts 1 weist eine Gehäuseöffnung 28 auf, die entweder mittels des erwähnten Gehäusedeckels 26 oder mittels des erwähnten Gehäusedeckels 27 verschlossen werden kann (Figur 3).

Im Einzelnen ergibt sich folgendes. Gemäß Figur 2 sind an der oberen Seitenfläche 29 des Gehäuses 3 der Außenluftanschluss 12, der Zuluftanschluss 13, der Raumluftanschluss 14 und der Abluftanschluss 15 angeordnet. Diese Anschlüsse führen in das Innere 2 des Gehäuses 3. Der Außenluftanschluss 12 steht lufttechnisch mit dem Zuluftventilator 8 in Verbindung, wobei zwischen diese beiden Elementen ein Luftfilter 31, ein Feinluftfilter 32 und eine Heizeinrichtung 33 geschaltet sein können. Der Ausgang des Zuluftventilators 8 führt zu einer Einbaueinheit 34, die in einen Einsetzplatz 35 des Gehäuses 3 bei Bedarf eingesetzt/eingebaut ist. An die Einbaueinheit 34 schließt sich lufttechnisch eine Luftverteilkammer 36 an, die zum Eingang 20 des Wärmetauschers 10 führt und zur Gehäuseöffnung 28 hin offen ausgebildet ist. Der Ausgang 21 des Wärmetauschers 10 steht lufttechnisch mit einer Luftverteilkammer 37 in Verbindung, die zum Zuluftanschluss 13 führt. Die Luftverteilkammer 37 ist ebenfalls zur Gehäuseöffnung 28 hin offen. Der Raumluftanschluss 14 steht über eine Luftverteilkammer 38 und ein Luftfilter 39 mit dem Eingang 22 des Wärmetauschers lufttechnisch in Verbindung. Der Ausgang 23 des Wärmetauschers 10 führt zu einer Luftverteilkammer 40, die sich bis zum Abluftventilator 9 erstreckt, dessen Ausgangsseite mit dem Abluftanschluss 15 verbunden ist. In einem Gehäusebereich 41 sind elektrische/elektronische Einrichtungen der Steuereinrichtung 19 untergebracht. Ebenso wie die Luftverteilkammern 36 und 37 weisen auch die Luftverteilkammern 38 und 40 je eine offene Seite auf, die in der Gehäuseöffnung 28 liegt.

Gemäß der Figur 3 ist die Anordnung nun derart getroffen, dass die Gehäuseöffnung 28 mittels des Gehäusedeckels 26 oder mittels des Gehäusedeckels 27 verschlossen werden kann. Da zwei verschiedene Gehäusedeckel 26 und 27 zur Verfügung stehen, gehört das Lüftungsgerät 1 einem Lüftungsgerätsystem an, wobei bei Verwendung des Gehäusedeckels 26 eine erste Gerätevariante und bei Verwendung des Gehäusedeckels 27 eine zweite Gerätevariante vorliegt. Es ist vorgesehen, dass der Gehäusedeckel 27 den Bypass 18 und der Gehäusedeckel 26 keinen Bypass aufweist, also ein bypassfreier Gehäusedeckel 26 ist. Der Gehäusedeckel 26 ist vorzugsweise plattenförmig, insbesondere quaderförmig ausgebildet. Er weist eine Vorderseite 41, eine Rückseite 42 sowie eine umlaufende Stirnwandzone 43 auf. Vorzugsweise besteht der Gehäusedeckel 26 aus expandiertem Homopolymerisat. Mit besonderem Vorzug ist vorgesehen, dass das Gehäuse 3, so wie es insbesondere der Figur 2 zu entnehmen ist, ebenfalls aus expandiertem Homopolymerisat besteht. Die zuvor zum Gehäusedeckel 26 erfolgten Ausführungen gelten in entsprechender Weise ebenfalls beim Gehäusedeckel 27. Letzterer unterscheidet sich von dem Gehäusedeckel 26 jedoch dadurch, dass dort der Bypass 18 integriert angeordnet ist. Hierzu ist die Wandstärke 44' des Gehäusedeckels 27 derart groß gewählt, dass in dieser Wandstärke der Bypass 18 untergebracht ist. Er weist entweder eine etwa U-förmige Gestalt auf, indem er eine Eingangsöffnung 44 besitzt und eine Ausgangsöffnung 45 und dazwischen eine U-förmige Struktur aufweist oder aber es ist lediglich eine längliche Vertiefung in der Rückseite 42 des Gehäusedeckels 27 vorhanden, d.h., zwischen der Eingangsöffnung 44 und der Ausgangsöffnung 45 ist der Bypass 18 auf der Rückseite 42 des Gehäusedeckels 27 ebenfalls offen, wobei dieser Bereich jedoch dann verschlossen wird, wenn der Gehäusedeckel 27 in die Gehäuseöffnung 28 des Gehäuses 3 eingesetzt wird. Vorzugsweise wirkt eine entsprechend ausgebildete Seite des Wärmetauschers 10 als Verschlusselement für den genannten Bereich. In der Figur 3 sind - zur Verdeutlichung - die beiden Gehäusedeckel 26 und 27 nicht in die Gehäuseöffnung 28 eingesetzt dargestellt. Insofern handelt es sich diesbezüglich bei der Figur 3 um eine Explosionsdarstelllung, die zwei Gerätevarianten verdeutlicht.

Aus dem Vorstehenden ist zu entnehmen, dass zur Herbeiführung der bereits beschriebenen ersten Betriebsart, die keinen Bypass vorsieht, der Gehäusedeckel 26 der Gehäuseöffnung 28 des Gehäuses 3 zugeordnet wird, wodurch das Gehäuse 3 verschlossen ist. Die Rückseite 42 des Gehäusedeckels 26 verschließt die offenen Seiten der Luftverteilkammern 36 und 37, wobei die Öffnungsränder 46 und 47 der Luftverteilkammern 36 und 37 Bypassanschlüsse 48 und 49 bilden. Da jedoch im Gehäusedeckel 26 kein Bypass vorhanden ist, werden demgemäß die Bypassanschlüsse 48 und 49 verschlossen.

Wie aus der vorstehenden Beschreibung zur Figur 1 hervorgeht, ist es für die erste Betriebsart ohne Bypass nicht erforderlich, eine Volumenstromstelleinrichtung 11 einzusetzen. Die Einbaueinheit 34, die die Volumenstromstelleinrichtung 11 bildet, ist bei der ersten Gerätevariante, die mit dem Gehäusedeckel 26 ausgestattet ist nicht erforderlich und wird daher aus Kostengründen nicht in das Gehäuse 3 eingesetzt/eingebaut, mit der Folge, dass der Ausgang des Zuluftventialtors 8 unmittelbar mit der Luftverteilkammer 36 lufttechnisch in Verbindung steht. Wird mit dem Gehäusedeckel 26 die Gehäuseöffnung 28 verschlossen, so wird der vom Zuluftventilator 8 geförderte Außenluftstrom nach Durchsetzen des Luftfilters 31 und Feinluftfilters 32 sowie nach optionaler Erwärmung mittels der Heizeinrichtung 33 direkt dem Eingang 20 des Wärmetauschers 10 zugeführt und tritt dann aus dem Ausgang 31 des Wärmetauschers 10 aus, gelangt in die Luftverteilkammer 37 und von dort zum Zuluftanschluss 13. Der Abluftventilator 9 fördert Raumluft Ra unter Passieren des Luftfilters 39 zum Eingang 22 des Wärmetauschers 10. Dieser Luftstrom durchsetzt den Wärmetauscher 10, wobei eine entsprechende Erwärmung oder Kühlung der Außenluft Au erfolgt und tritt aus dem Ausgang 23 des Wärmetauschers 10 aus, gelangt in die Luftverteilkammer 40 und von dort über den Abluftventilator 9 zum Abluftanschluss 15. Mittels der Steuereinrichtung 19 lassen sich die Volumenströme der beiden Ventilatoren 8 und 9 wunschgemäß einstellen.

Soll alternativ die zweite Betriebsart mit Bypass 18 realisiert werden, so kommt die zweite Gerätevariante zum Einsatz, die sich von der ersten Gerätevariante nur dadurch unterscheidet, dass anstelle des Gehäusedeckels 26 der Gehäusedeckel 27 in die Gehäuseöffnung 28 des Gehäuses 3 eingesetzt wird. Optional kann zuvor die Einbaueinheit 34 in den Einsetzplatz 35 eingesetzt werden, also eine Volumenstromstelleinrichtung 11 vorgesehen werden. Wird nun diese zweite Gerätevariante in Betrieb genommen, so gelten die entsprechenden Luftstromwege und Funktionen, sowie sie vorstehend bei der Gerätevariante 1 erläutert wurden. Abweichend ist jedoch aufgrund des nunmehr gegebenenfalls wirksamen Bypasses 18 eine Verbindung zwischen der Luftverteilkammer 36 und der Luftverteilkammer 37 geschaffen, sodass die geförderte Außenluft Au nicht mehr vollständig den Wärmetauscher 10 durchsetzt, sondern nur ein Teil davon und ein anderer, übriger Teil über den Bypass 18 den Wärmetauscher 10 umgeht. Ist die optional einsetzbare Volumenstromstelleinrichtung 11 vorgesehen, so kann das Verhältnis der Luftstromaufteilung in gewünschter Weise eingestellt werden, d.h., es ist möglich, dass der Wärmetauscher 10 vollständig umgangen wird, sodass keine Wärmetauschfunktion vorliegt und die gesamte Außenluft Au nicht durch den Wärmetauscher strömt, sondern durch den Bypass 18. Oder der Bypass 18 wird komplett geschlossen und die gesamte Außenluft Au durchströmt den Wärmetauscher 10. Es sind entsprechende Zwischenstellungen zwischen diesen beiden Extremen möglich, in Abhängigkeit von der Einstellung der Volumenstromstelleinrichtung 11.

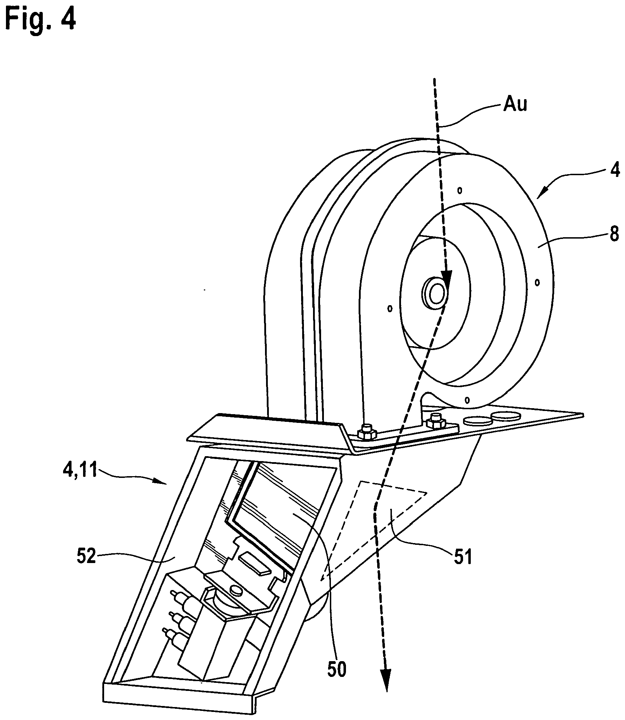

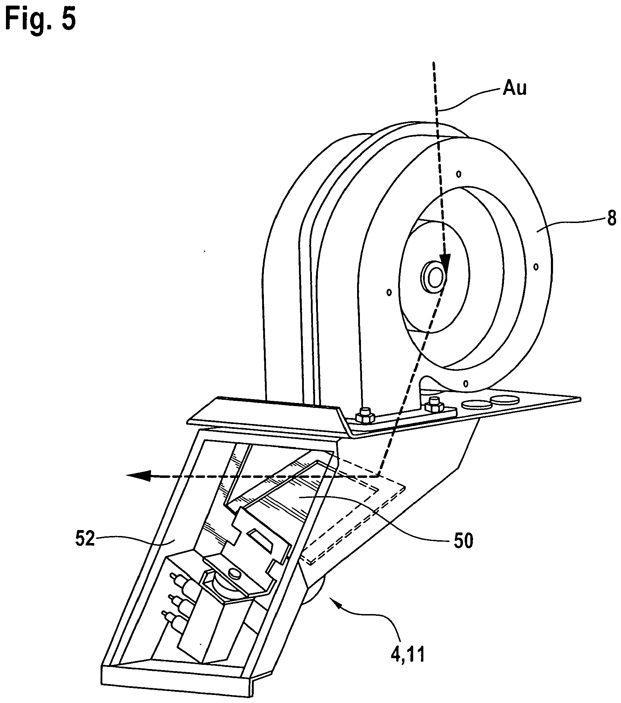

Die Volumenstromstelleinrichtung 11 weist - gemäß der Figuren 4 und 5 - vorzugsweise eine verstellbare Luftklappe 50 auf, die mittels der Steuereinrichtung in ihrer Stellung beeinflusst werden kann. In der Figur 4 ist sie vollständig geschlossen und in der Figur 5 vollständig geöffnet ist, mit der Folge, dass der entsprechende Außenluftstrom - wie ersichtlich - in unterschiedliche Richtungen gelenkt wird. In der Figur 4 erfolgt das Ausströmen aus einer Ausströmöffnung 51 und in der Figur 5 aus einer Ausströmöffnung 52. Die Ausströmöffnung 51 steht strömungstechnisch mit der Luftverteilkammer 36 in Verbindung und die Ausströmöffnung 52 bildet den Bypassanschluss 48. Selbstverständlich ist es möglich, dass die Luftklappe 50 zwischen den beiden aus den Figuren 4 und 5 hervorgehenden Maximalstellungen Zwischenstellungen einnimmt, mit der Folge, dass die Außenluft Au mit entsprechenden Teilen durch die Ausströmöffnung 51 und die Ausströmöffnung 52 strömt. Liegt im Betrieb die Klappenstellung gemäß Figur 4 vor, bei der die Ausströmöffnung 52 verschlossen und die Ausströmöffnung 51 geöffnet ist, so strömt die Außenluft Au komplett in die Luftverteilkammer 36 und durchsetzt komplett den Wärmetauscher 10. Liegt die Klappenstellung der Figur 5 vor, so strömt die Außenluft Au komplett aus der Ausströmöffnung 52 aus und gelangt direkt in den Bypass 18, mit der Folge, dass der Wärmetauscher 10 vollständig umgangen wird. Liegen Zwischenstellungen der Luftklappe 50 vor, so werden entsprechende Teilströme mit entsprechenden Volumenstromanteilen gebildet, von denen einer den Wärmetauscher 10 durchsetzt und der andere den Bypass 18 passiert.

Das erfindungsgemäße Lüftungsgerätsystem erlaubt demzufolge die Ausbildung verschiedener Gerätevarianten mit unterschiedlichen Betriebsarten, wobei hierzu ein und dasselbe Grundgerät zum Einsatz gelangt und diesem lediglich unterschiedliche Gehäusedeckel mit oder ohne Bypass zugeordnet werden. Optional ist es ferner möglich, bei den verschiedenen Gerätevarianten dem Grundgerät mindestens eine Einbaueinheit 34 zuzuordnen oder nicht zuzuordnen, um weitere Betriebsarten oder Betriebsartenvariationen herbeizuführen.

## Patentansprüche

1. Lüftungsgerät (1) mit Wärmerückgewinnung für mindestens einen Raum (5) eines Gebäudes oder dergleichen, mit einem Gehäuse (3), in dem ein Wärmetauscher (10) angeordnet ist, durch den ein Zuluftweg (16) für Zuluft und ein Abluftweg (17) für Abluft verläuft, wobei Zuluftweg (16) und Abluftweg (17) mittels des Wärmetauschers (10) in Wärmetausch zueinander bringbar sind, **dadurch gekennzeichnet, dass** zur Ausbildung eines Lüftungsgerätsystems mit verschiedenen Gerätevarianten eine Gehäuseöffnung (28) des Gehäuses (3) mit einem von verschiedenen abnehmbaren Gehäusedeckeln (26,27) verschlossen ist, wobei die Gehäusedeckel (26,27) mindestens einen mit einem Bypass (18) versehenen Gehäusedeckel (27) und mindestens einen bypassfreien Gehäusedeckel (26) umfassen, wobei der Wärmetauscher (10) mittels des Bypasses (18) überbrückbar ist und der Bypass (18) in dem entsprechenden Gehäusedeckel (27) integriert ist.

2. Lüftungsgerät nach Anspruch 1, **dadurch gekennzeichnet, dass** in dem Gehäuse (3) Bypassanschlüsse (48,49) derart angeordnet sind, dass diese mit dem Bypass (18) verbunden sind, wenn mit dem mit Bypass (18) versehenen Gehäusedeckel (27) die Gehäuseöffnung (28) verschlossen ist.

3. Lüftungsgerät nach Anspruch 2, **dadurch gekennzeichnet, dass** der bypassfreie Gehäusedeckel (26) mindestens einen Verschlussbereich aufweist, der mindestens einen der Bypassanschlüsse (48,49) verschließt, wenn mit dem bypassfreien Gehäusedeckel (26) die Gehäuseöffnung (28) verschlossen ist.

4. Lüftungsgerät nach einem der vorhergehenden Ansprüche, **dadurch gekennzeichnet, dass** in dem Gehäuse (3) mindestens ein Einsetzplatz (35) für eine Einbaueinheit (34) ausgebildet ist.

5. Lüftungsgerät nach Anspruch 4, **gekennzeichnet durch** die Einbaueinheit (34), die in Abhängigkeit von den verschiedenen Gerätevarianten in den Einsetzplatz (35) eingesetzt ist oder nicht eingesetzt ist.

6. Lüftungsgerät nach Anspruch 4 oder 5, **dadurch gekennzeichnet, dass** die Einbaueinheit (34) mindestens einen der Bypassanschlüsse (48,49) aufweist oder mindestens eine lufttechnische Verbindung zu mindestens einem der Bypassanschlüsse (48,49) besitzt.

7. Lüftungsgerät nach einem der Ansprüche 4 bis 6, **dadurch gekennzeichnet, dass** die Einbaueinheit (34) eine Volumenstromstelleinrichtung (11), insbesondere eine verstellbare Luftklappe (50), für den Bypass (18) aufweist.

8. Lüftungsgerät nach einem der vorhergehenden Ansprüche, **dadurch gekennzeichnet, dass** das Gehäuse (3) aus expandiertem Homopolymerisat besteht oder dieses aufweist.

9. Lüftungsgerät nach einem der vorhergehenden Ansprüche, **dadurch gekennzeichnet, dass** der Gehäusedeckel (26,27) aus expandiertem Homopolymerisat besteht oder dieses aufweist.

10. Lüftungsgerät nach Anspruch 8 oder 9, **dadurch gekennzeichnet, dass** das expandierte Homopolymerisat expandiertes Polypropylen oder expandiertes Polystyrol ist.

11. Lüftungsgerät nach einem der vorhergehenden Ansprüche, **dadurch gekennzeichnet, dass** der Bypass (18) in der Wandstärke (44') des Gehäusedeckels (26,27) angeordnet ist.

12. Lüftungsgerät nach einem der Ansprüche 8 bis 11, **dadurch gekennzeichnet, dass** der Bypass (18) als Kanal direkt in dem Homopolymerisat des Gehäusedeckels (27) ausgebildet ist.

13. Lüftungsgerät nach einem der vorhergehenden Ansprüche, **dadurch gekennzeichnet, dass** der Gehäusedeckel (26,27) eine Gehäusewand ist, die eine komplette Seitenfläche des Gehäuses (3) bildet.

## Claims

1. A ventilation device (1) with heat recovery for at least one room (5) of a building or the like, the device having a housing (3) in which a heat exchanger (10) is arranged, through which an air supply path (16) for fresh air and an air discharge path (17) for discharge air are guided, wherein the air supply path (16) and the air discharge path (17) can be brought in a heat exchanging relation by means of the heat exchanger (10), **characterised in that**, for the configuration of a ventilation device system with several device variants, a housing opening (28) of the housing (3) is closed with one of several removable housing covers (26, 27), wherein the housing covers (26, 27) comprise at least one housing cover (27) provided with a bypass (18) and at least one housing cover (26) without a bypass, wherein the heat exchanger (10) can be bridged by means of the bypass (18), and the bypass (18) is integrated into the corresponding housing cover (27).

2. The ventilation device according to claim 1, **characterised in that** bypass connections (48, 49) are arranged in the housing (3) in such a way that they are connected to the bypass (18) when the housing opening (28) is closed off by means of the housing cover (27) provided with the bypass (18).

3. The ventilation device according to claim 2, **characterised in that** the housing cover (26) without the bypass has at least one closure region that closes off at least one of the bypass connections (48, 49) when the housing opening (28) is closed off by means of the housing cover (26) without a bypass (18).

4. The ventilation device according to any one of the preceding claims, **characterised in that** at least one insertion place (35) for an installation unit (34) is formed in the housing (3).

5. The ventilation device according to claim 4, **characterized by** the installation unit (34) that is inserted into the insertion place (35) or not, depending on the different device variants.

6. The ventilation device according to claim 4 or 5, **characterised in that** the insertion unit (34) has at least one of the bypass connections (48, 49), or has at least one air-flow connection to at least one of the bypass connections (48, 49).

7. The ventilation device according to any one of claims 4 to 6, **characterised in that** the installation unit (34) has a volume flow adjustment device (11), in particular an adjustable louver (50), for the bypass (18).

8. The ventilation device according to any one of the preceding claims, **characterised in that** the housing (3) is made of or comprises an expanded homopolymerisate.

9. The ventilation device according to any one of the preceding claims, **characterised in that** the housing cover (26, 27) is made of or comprises an expanded homopolymerisate.

10. The ventilation device according to claim 8 or 9, **characterised in that** the expanded homopolymerisate is expanded polypropylene or expanded polystyrene.

11. The ventilation device according to any one of the preceding claims, **characterised in that** the bypass (18) is arranged in the wall thickness (44') of the housing cover (26, 27).

12. The ventilation device according to any one of claims 8 to 11, **characterised in that** the bypass (18) is formed as a channel directly in the homopolymerisate of the housing cover (27).

13. The ventilation device according to any one of the preceding claims, **characterised in that** the housing cover (26, 27) is a housing wall forming a complete lateral surface of the housing (3).

## Revendications

1. Appareil d'aération (1) avec récupération de chaleur, pour au moins une pièce (5) d'un bâtiment ou similaire, avec un boîtier (3) dans lequel un échangeur de chaleur (10) est arrangé, à travers lequel un chemin d'amenée d'air (16) pour l'air d'alimentation et un chemin d'évacuation d'air (17) pour l'air d'évacuation sont prévus, dans lequel le chemin d'amenée d'air (16) et le chemin d'évacuation d'air (17) peuvent être mis en relation d'échange thermique l'un avec l'autre au moyen de l'échangeur de chaleur (10), **caractérisé en ce que**, pour former un système d'appareil d'aération avec différentes variantes d'appareil, une ouverture de boîtier (28) du boîtier (3) est fermée avec un des différents couvercles de boîtier amovibles (26, 27), les couvercles de boîtier (26, 27) comprenant au moins un couvercle de boîtier (27) muni d'une dérivation (18) et au moins un couvercle de boîtier (26) sans dérivation, dans lequel l'échangeur de chaleur (10) peut être ponté au moyen de la dérivation (18), et la dérivation (18) est intégrée dans le couvercle de boîtier (27) correspondant.

2. Appareil d'aération selon la revendication 1, **caractérisé en ce que** des connexions de dérivation (48, 49) sont arrangées dans le boîtier (3) de telle manière qu'ils sont connectées avec la dérivation (18) lorsque l'ouverture de boîtier (28) est fermée avec le couvercle de boîtier (27) muni de la dérivation (18).

3. Appareil d'aération selon la revendication 2, **caractérisé en ce que** le couvercle de boîtier (26) sans dérivation présente au moins une région de fermeture qui ferme au moins une des connexions de dérivation (48, 49) lorsque l'ouverture de boîtier (28) est fermée avec le couvercle de boîtier (26) sans dérivation.

4. Appareil d'aération selon l'une quelconque des revendications précédentes, **caractérisé en ce qu'**au moins un emplacement d'insertion (35) pour une unité d'installation (34) est formé dans le boîtier (3).

5. Appareil d'aération selon la revendication 4, **caractérisé par** l'unité d'installation (34) qui est insérée ou non dans l'emplacement d'insertion (35) en fonction des différentes variantes d'appareil.

6. Appareil d'aération selon la revendication 4 ou 5, **caractérisé en ce que** l'unité d'installation (34) présente au moins une des connexions de dérivation (48, 49), ou présente au moins une liaison d'air avec au moins une des connexions de dérivation (48, 49).

7. Appareil d'aération selon l'une quelconque des revendications 4 à 6, **caractérisé en ce que** l'unité d'installation (34) présente un dispositif de réglage de débit volumique (11), notamment un volet d'air (50) réglable, pour la dérivation (18).

8. Appareil d'aération selon l'une quelconque des revendications précédentes, **caractérisé en ce que** le boîtier (3) est constitué de ou comprend un homopolymère expansé.

9. Appareil d'aération selon l'une quelconque des revendications précédentes, **caractérisé en ce que** le couvercle de boîtier (26, 27) est constitué de ou comprend un homopolymère expansé.

10. Appareil d'aération selon la revendication 8 ou 9, **caractérisé en ce que** l'homopolymère expansé est du polypropylène expansé ou du polystyrène expansé.

11. Appareil d'aération selon l'une quelconque des revendications précédentes, **caractérisé en ce que** la dérivation (18) est disposée dans l'épaisseur de paroi (44') du couvercle de boîtier (26, 27).

12. Appareil d'aération selon l'une quelconque des revendications 8 à 11, **caractérisé en ce que** la dérivation (18) est configurée sous forme d'un conduit directement dans l'homopolymère du couvercle de boîtier (27).

13. Appareil d'aération selon l'une quelconque des revendications précédentes, **caractérisé en ce que** le couvercle de boîtier (26, 27) est une paroi de boîtier qui forme une surface latérale complète du boîtier (3).
